# EUROPÄISCHE PATENTSCHRIFT

(11) **EP 2 800 307 B1**
(45) Veröffentlichungstag und Bekanntmachung des Hinweises auf die Patenterteilung: **08.06.2016**
(21) Anmeldenummer: 14165972.2
(22) Anmeldetag: 25.04.2014
(51) Int. Cl.: H04L 12/24, H04L 29/06, G06F 21/55

(54) **VERFAHREN ZUR FESTSTELLUNG VON ABWEICHUNGEN VON EINEM VORGEGEBENEN NORMALZUSTAND**
METHOD FOR DETECTING DEVIATIONS FROM A GIVEN STANDARD STATE
PROCÉDÉ DE DÉTERMINATION D'ÉCARTS PAR RAPPORT À UN ÉTAT NORMAL PRÉDÉFINI

(30) Priorität: 29.04.2013 AT 502922013
(43) Veröffentlichungstag der Anmeldung: 05.11.2014
(73) Patentinhaber: AIT Austrian Institute of Technology GmbH, 1220 Wien (AT)
(72) Erfinder: Skopik, Florian, 3701 Großweikersdorf (AT); Fiedler, Roman, 8020 Graz (AT)
(74) Vertreter: Wildhack & Jellinek

(56) Entgegenhaltungen:
- EP-A1- 2 299 650
- Heikki Mannila ET AL: "Discovery Discovery of Frequent Episodes in Event Sequences", Data Mining and Knowledge Discovery, 1. September 1997 (1997-09-01), Seiten 259-289, XP055138753, Gefunden im Internet: URL:http://rd.springer.com/content/pdf/10. 1023/A:1009748302351.pdf [gefunden am 2014-09-08]
- Jon Meek: "How to Handle a Few Hundred Million Extra Firewall Log Lines Per Day Thanks to the Latest Virus or Worm", 21st Large Installation System Administration Conference, 14. November 2007 (2007-11-14), XP055138952, Gefunden im Internet: URL:https://www.usenix.org/legacy/event/li sa07/posters/meek.pdf [gefunden am 2014-09-09]
- STEARLEY J: "Towards informatic analysis of syslogs", CLUSTER COMPUTING, 2004 IEEE INTERNATIONAL CONFERENCE ON SAN DIEGO, CA, USA SEPT. 20-23, 2004, PISCATAWAY, NJ, USA,IEEE, 20. September 2004 (2004-09-20), Seiten 309-318, XP010770307, DOI: 10.1109/CLUSTR.2004.1392628 ISBN: 978-0-7803-8694-5
- VARUN CHANDOLA ET AL: "Anomaly Detection for Discrete Sequences: A Survey", IEEE TRANSACTIONS ON KNOWLEDGE AND DATA ENGINEERING, IEEE SERVICE CENTER, LOS ALAMITOS, CA, US, Bd. 24, Nr. 5, 1. Mai 2012 (2012-05-01), Seiten 823-839, XP011440359, ISSN: 1041-4347, DOI: 10.1109/TKDE.2010.235

## Beschreibung

Die Erfindung betrifft ein Verfahren zur Feststellung von Abweichungen von einem vorgegebenen Normalzustand, insbesondere verursacht durch Manipulation bei einem Computernetzwerk. Aus dem Stand der Technik ist eine Vielzahl von unterschiedlichen Vorgehensweisen bekannt, mit denen in Computernetzwerken unterschiedliche Bedrohungsszenarien oder generell Abweichungen von einem vorgegebenen Normalzustand ermittelt werden können. Bei sämtlichen dieser Vorgehensweisen werden unterschiedliche Protokollierungsmechanismen herangezogen, wobei untersucht wird, ob einzelne, vorgegebene Bedingungen erfüllt sind, die auf Abweichungen von einem vorgegebenen Normalzustand, insbesondere auf Manipulationen, hindeuten. Ein wesentliches Erfordernis üblicher Verfahren zur Feststellung solcher Abweichungen oder Manipulationen ist, dass für die jeweils verwendeten Protokolle Parsing-Mechanismen zur Verfügung stehen, mit denen der semantische Inhalt der Protokolldatensätze analysiert werden kann, d.h. dass aus den Protokollen die jeweils erfolgten Abläufe ermittelt werden können.

Die Schrift EP2299650A1 legt ein Verfahren zur Anomalieerkennung offen, in welchem in einer Trainingsphase Sequenzen von zusammen auftretenden Ereignissen gelernt werden. In einer Betriebsphase wird eine Anomalie erkannt, wenn mindestens ein Ereignis in der Sequenz nicht auftritt.

Die Schrift "Discovery Discovery of Frequent Episodes in Event Sequences", von Heikki Mannila et al, publiziert in Data Mining and Knowledge Discovery, 1. September 1997 (1997-09-01), Seiten 259-289, XP055138753, legt einen Algorithmus offen um Sequenzen von zusammen auftretenden Ereignissen zu lernen.

Zusätzlich zur Erstellung der Parser, müssen anschließend bestimmte Prüfbedingungen festgelegt werden, um damit dann die Abfolge der zuvor vorgenommenen Protokollierungen zu überprüfen.

Aufgabe der Erfindung ist es hingegen, ein Verfahren zur Feststellung von Abweichungen von einem vorgegebenen Normalzustand zur Verfügung zu stellen, bei dem eine semantische Überprüfung der einzeln erstellten Protokolldatensätze gerade nicht erforderlich ist und eine Prüfung und Verarbeitung unterschiedlichster Protokolldatensätze möglich ist. Die Erfindung löst diese Aufgabe bei einem Verfahren der eingangs genannten Art mit den kennzeichnenden Merkmalen des Patentanspruchs 1. Zur Feststellung von Abweichungen von einem vorgegebenen Normalzustand, insbesondere verursacht durch Manipulation, werden bei einem Computernetzwerk, bei dem von den Computern des Computernetzwerks oder von den auf diesen Computern ablaufenden Programmen jeweils Protokolle erstellt,
- wobei von den Programmen oder Computern jeweils Kriterien für die Protokollierung von als relevant erachteten Ereignissen festgelegt werden und im Falle des Auftretens eines solchen Ereignisses jeweils ein Protokolldatensatz erstellt wird, dem ein Zeitstempel sowie ein Beschreibungsdatensatz des jeweiligen protokollierten Ereignisses zugeordnet werden, und
- wobei sämtliche von den einzelnen Computern erstellten Protokolldatensätze zur Verfügung gehalten werden.

Die Erfindung sieht dabei vor,
- dass im Zuge einer Kalibrierung
   a) aus den Beschreibungsdatensätzen der Protokolldatensätze Teildatensätze, insbesondere zufällig, ausgewählt werden,
   b) dass Gruppen von Teildatensätzen gebildet werden, die sich in Protokolldatensätzen befinden und deren Zeitstempel innerhalb einer vorgegebenen Zeitspanne liegen,
   c) dass innerhalb der Beschreibungsdatensätze Protokolldatensätze nach weiteren Vorkommen eines ersten Teildatensatzes aus einer der erstellten Gruppen gesucht wird und geprüft wird, ob sich innerhalb der vorgegebenen Zeitspanne die übrigen der jeweiligen Gruppe zugeordneten Teildatensätze befinden, wobei bei mehrmaliger erfolgreicher Prüfung jeweils ein Prüfungsdatensatz umfassend den ersten Teildatensatz, die übrigen Teildatensätze sowie die Zeitspanne erstellt wird, und - dass während des laufenden Betriebs des Computernetzwerks
   d) der Beschreibungsdatensatz eines zu untersuchenden Protokolldatensatzes auf das Vorhandensein eines in einem der Prüfungsdatensätze abgespeicherten ersten Teildatensatzes untersucht wird,
   e) wenn der erste Teildatensatz eines der Prüfungsdatensätze in dem zu untersuchenden Protokolldatensatz aufgefunden wurde, geprüft wird, ob die übrigen Teildatensätze des Prüfungsdatensatzes in Protokolldatensätzen vorhanden sind, deren Zeitstempel sich vom Zeitstempel des zu untersuchenden Protokolldatensatzes maximal um die dem Prüfungsdatensatz zugeordneten Zeitspanne unterscheidet, und
   f) sofern nicht alle der übrigen Teildatensätze innerhalb vom jeweiligen Prüfungsdatensatz mit einem Zeitstempel innerhalb der Zeitspanne aufgefunden werden, dies als Abweichung beurteilt und gegebenenfalls eine diesbezügliche Warnung erstellt wird.

Wesentlicher Vorteil des erfindungsgemäßen Vorgehens ist es, dass eine konkrete, semantische Analyse der Protokolldatensätze entfallen kann und das erfindungsgemäße Verfahren wesentlich einfacher auf Computernetzwerken mit unterschiedlichsten Computeranwendungen durchgeführt werden kann. Es ist somit auch möglich, bei unterschiedlichen Konfigurationen einzelner Computer oder des gesamten Computernetzwerks jeweils eine für das Computernetzwerk abgestimmte Anzahl von Prüfungsdatensätzen zu finden, mit denen eine Abweichung vom vorgegebenen Normalzustand, insbesondere bei Vorliegen von Manipulationen, ermittelt werden kann.

Um eine Kompatibilität mit den meisten, gängigen Softwareprogrammen zu erreichen, kann vorteilhafterweise vorgesehen sein, dass ein dem jeweiligen Protokolldatensatz zugeordneter Beschreibungsdatensatz sowie die Teildatensätze jeweils durch Zeichenketten repräsentiert werden.

Hierbei kann zur Auswahl von Teildatensätzen vorgesehen sein, dass bei der Auswahl von Teildatensätzen aus den Beschreibungsdatensätzen der Protokolldatensätze jeweils eine zusammenhängende Teilzeichenkette der den Beschreibungsdatensatz repräsentierenden Zeichenkette ausgewählt wird und als Teildatensatz zur Verfügung gehalten wird.

Zur Suche nach dem Vorkommen eines Teildatensatzes kann vorgesehen sein, dass bei der Suche nach dem Vorkommen eines Teildatensatzes im Beschreibungsdatensatz eines Protokolldatensatzes in den Schritten c), d) und e) des Patentanspruchs 1 jeweils überprüft wird, ob die Zeichenkette des Teildatensatzes einer zusammenhängenden Teilzeichenkette des Beschreibungsdatensatzes des Protokolldatensatzes entspricht.

Eine besonders einfache Ausführungsform der Erfindung sieht vor, dass alle Teildatensätze jeweils dasselbe Datenvolumen und/oder dieselbe Länge aufweisen.

Um zu gewährleisten, dass lediglich Prüfungsdatensätze herangezogen werden, die den normalen Zustand des Computersystems mit ausreichender Präzision repräsentieren, kann vorgesehen sein, dass in Schritt c) ein Prüfungsdatensatz jeweils nur dann erstellt wird, wenn eine Signifikanzfunktion SC (c(X), c'(X)) einen Wert angibt, der einen vorab vorgegebenen Schwellenwert übersteigt, wobei c(X) der Anzahl der erfolgreichen Prüfungen und c'(X) der Anzahl der nicht erfolgreichen Prüfungen entspricht.

Um das zeitnahe Auftreten einzelner Teildatensätze in Protokolldatensätzen zeitnäher abzufragen, kann vorgesehen sein, dass in Schritt c) bei mehrfacher erfolgreicher Prüfung ermittelt wird, innerhalb welcher Zeitspanne die Zeitstempel der einzelnen der Gruppe zugeordneten Teildatensätze liegen und die dem Prüfungsdatensatz zugeordnete Zeitspanne, insbesondere für jeden der übrigen Teildatensätze separat, auf ein Intervall festgelegt wird, das durch die minimale und maximalen Zeitdifferenz, vorzugsweise mit einem vorgegebenen Toleranzbereich, zwischen dem Auftreten des ersten Teildatensatzes und dem jeweiligen übrigen Teildatensatz festgelegt wird.

Eine möglichst einfache und zeiteffiziente Abfrage sieht vor, dass jeder Gruppe genau zwei Teildatensätze zugeordnet werden.

Um eine zu große Anzahl von Abweichungen vom vorgegebenen Normalzustand nach einem Austausch oder einer Umrüstung von Computern oder auf den Computern ausgeführten Computerprogrammen zu vermeiden, kann vorgesehen sein, dass der Kalibrierungsschritt umfassend die Schritte a) bis c) in vorgegebenen Zeitintervallen, und/oder einen vorgegebenen Zeitraum nach dem Austausch oder der Umrüstung von Computern oder der auf diesen ausgeführten Programmen wiederholt wird, wobei jeweils nur diejenigen Protokolldatensätze berücksichtigt werden, deren Zeitstempel innerhalb des letzten Zeitintervalls oder seit dem Austausch oder der Umrüstung liegt.

Um eine größere Zuverlässigkeit der Prüfungsdatensätze hinsichtlich der ermittelten Teildatensätze zu ermöglichen, kann vorgesehen sein, dass bei demselben Prüfungsdatensatz zugeordneten Teildatensätzen, die sich innerhalb desselben Protokolldatensatzes befinden, untersucht wird, ob der Zwischenbereich zwischen den Teildatensätzen identisch ist, und in diesem Fall bei der neuerlichen Durchführung des Kalibrierungsschritts ein weiterer Teildatensatz herangezogen wird, der aus den beiden Teildatensätzen sowie dem Zwischenbereich zwischen den Teildatensätzen zusammengesetzt ist.

Um eine Prüfung des Zusammenwirkens unterschiedlicher Computerprogramme oder Computer zu ermöglichen, kann vorgesehen sein, dass den Prüfungsdatensätzen ausschließlich übrige Teildatensätze hinzugefügt werden, die nicht aus dem Protokolldatensatz stammen, aus dem der erste Teildatensatz stammt.

Um eine ausreichende Prüfung sämtlicher erstellter Protokolldatensätze zu ermöglichen, kann vorgesehen, sein, dass so viele Prüfungsdatensätze erstellt werden, dass zumindest in einem vorgegebenen Anteil der Beschreibungsdatensätze der während eines vorgegebenen Zeitraums erstellten Protokolldatensätze jeweils Teilfolgen enthalten sind.

Um Änderungen des zu überwachenden Computersystems automatisiert festzustellen, kann vorgesehen sein, dass die Ermittlung der Anzahl c(X) eines Prüfungsdatensatzes sowie der Anzahl der nicht erfolgreichen Prüfungen c'(X) nach der Erstellung des Prüfungsdatensatzes, insbesondere in vorgegebenen Zeitabständen, erneut ausgeführt wird und der Prüfungsdatensatz gelöscht wird, wenn nicht eine Signifikanzfunktion SC ((x), c'(x)) einen Wert angibt, der einen vorab vorgegebenen Schwellenwert übersteigt.

Um auch bei Systemänderungen jeweils eine ausreichende Anzahl von Prüfungsdatensätzen zur Verfügung zu haben, kann vorgesehen sein, dass, falls nach der Löschung eines Prüfungsdatensatzes weniger als ein vorgegebener Anteil der Beschreibungsdatensätze der während eines vorgegebenen Zeitraums erstellten Protokolldatensätze Teilfolgen enthalten ist, erneut eine Kalibrierung gemäß den Schritten a) bis c) des Patentanspruchs 1 durchgeführt wird und den bisherigen, nicht gelöschten Prüfungsdatensätzen neue Prüfungsdatensätze hinzugefügt werden.

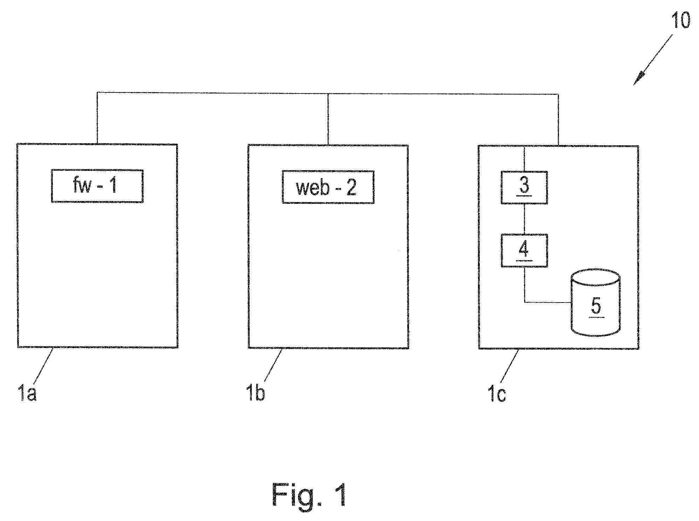

Ein bevorzugtes Ausführungsbeispiel der Erfindung wird anhand der folgenden Zeichnungsfiguren dargestellt. In Fig. 1 ist ein zu untersuchendes Computernetzwerk mit einer Anzahl von Computern dargestellt.

### Netzwerk und Konfiguration:

Beim vorliegenden Ausführungsbeispiel handelt es sich um ein Computernetzwerk mit drei Computern 1 a, 1 b und 1 c **(****Fig. 1**)**.** Auf jedem der Computer 1 a, 1 b, 1 c läuft jeweils eine Anzahl von Computerprogrammen ab, wobei im vorliegenden Ausführungsbeispiel auf dem ersten Computer 1a eine Firewall fw-1 und am zweiten Computer 1b ein Webserver web-2 installiert und aktiv sind.

In diesem Computernetzwerk 10 befinden sich weiters noch eine Überwachungseinheit 3 sowie eine Protokollierungseinheit 4, die mit einer Protokolldatenbank 5 verbunden ist. Es ist jedoch nicht notwendig, dass eine zentrale Protokolldatenbank verwendet wird. Alternativ besteht auch die Möglichkeit, auf die einzelnen Protokolldaten verteilt zuzugreifen. Anstelle der Abspeicherung der Daten können die Daten auch per Streaming zur Verfügung gestellt werden.

Die Überwachungseinheit 3, die Protokollierungseinheit und die Protokolldatenbank können als Software-Programme auf einem der Computer 1c des Computernetzwerks 10 implementiert sein. Während des laufenden Betriebs erstellen sämtliche der Computer 1a, 1b, 1c des Computernetzwerks 10 sowie die auf diesen Computern 1a, 1b, 1c ablaufenden Computerprogramme fw-1, web-2 jeweils Protokolle.

### Protokolldaten:

Jedes der auf den Computern 1a, 1b, 1c ablaufenden Programme fw-1, web-2 erstellt dabei Protokolldatensätze P, denen jeweils ein Zeitstempel T zugeordnet wird. Die Auswahl der als relevant erachteten Ereignisse, bei denen ein Computerprogramm 2 oder ein Computer 1 jeweils eine Protokollzeile #1 - #6 erstellt, bleibt dem jeweiligen Programmierer des Programms oder dem jeweiligen Administrator des Computers 1 überlassen und braucht zur Funktionsfähigkeit des erfindungsgemäßen Verfahrens vorab nicht vorgegeben sein. Weiters ist es ebenfalls nicht erforderlich, dass der semantische Inhalt der Protokolldatenzeilen #1 - #6 vorab zur Verfügung gestellt wird. Vielmehr ist es ausreichend, dass die jeweilige Protokollzeile #1 - #6 einen Zeitstempel T sowie einen Beschreibungsdatensatz D umfasst.

Der Computer 1a ist so konfiguriert, dass normalerweise sämtliche Zugriffe nur über die Firewall fw-1 auf den Webservers web-2 erfolgen. In den in **Tabelle 1** dargestellten Protokollzeilen #1 - #6 findet man daher normalerweise nach einem erfolgreichen Netzwerkzugriff von der Firewall fw-1 immer kurz danach einen entsprechenden Protokolleintrag des Webservers web-2.

**Tabelle 1 enthält einen kurzen Ausschnitt von Protokolldatensätzen von auf Computern eines Computernetzwerkes ablaufenden Programmen.**

| **#** | **Quelle** | **Protokollzeile** | **Anmerkung** |
|---|---|---|---|
| **1** | **fw-1** | Dec 17 17:13:11 fw-1 iptables:ACCEPT IN=eth2 OUT=eth0 SRC=192.168.0.11 DST=192.168.100.5 PROTO=TCP SPT=55325 DPT=443 | |
| **2** | **web-2** | Dec 17 17:13:11 192.168.0.11 web-2 - - "GET /" 200 "Mozilla/4.0 (compatible; MSIE 7.0; ... | |
| **3** | **fw-1** | Dec 17 17:13:17 fw-1 iptables:DROP IN=eth3 OUT=eth0 SRC=1.2.3.4 DST=192.168.100.6 PROTO=TCP SPT=38183DPT=443 | zufälliges Ereignis |
| **4** | **fw-1** | Dec 17 17:13:17 fw-1 iptables:ACCEPT IN=eth2 OUT=eth0 SRC=192.168.3.44DST=192.168.100.5 PROTO=TCP SPT=4932DPT=443 | |
| **5** | **web-2** | Dec 17 17:13:17 192.168.3.44web-2 - - "GET /" 200 "Mozilla/4.0 (compatible; MSIE 7.0; ... | |
| **6** | **fw-1** | Dec 17 17:13:22fw-1backup agent connection opened | Regelmäßiges Ereignis, ohne Zusammenhang mit Datensatz 1, 2 |

In **Tabelle 1** findet sich beispielsweise in der ersten dargestellten Protokollzeile #1 eine Meldung, mit der die Firewall einen Datenzugriff akzeptiert. Unmittelbar darauf folgend, findet sich eine weitere Protokollzeile, die vom Webserver web-2 erstellt wurde und die auf den Zugriff mittels einer Webapplikation hinweist. Ebenso findet sich in den Protokolldatensätzen unter #4 ein Zugriff auf die Firewall fw-1 und anschließend unter #5 ein entsprechender Protokolleintrag des Webservers web-2. Die Protokollereignisse #3 und #6 stehen hingegen nicht im Zusammenhang mit den Datensätzen #1, #2 bzw. #4, #5. Aus dieser Betrachtung geht nunmehr klar hervor, dass bestimmte Ereignisse, die sich anhand der Protokollzeilen #1 - #6 nachvollziehen lassen, stets in einer bestimmten zeitlichen Abfolge zueinander protokolliert werden.

Aus den einzelnen erstellten Protokollzeilen #1 - #6 werden jeweils ein Zeitstempel T sowie ein Beschreibungsdatensatz D des jeweiligen protokollierten Ereignisses E extrahiert. **Tabelle 2** zeigt Protokolldatensätze P, die aus den in **Tabelle 1** dargestellten Protokollzeilen #1 - #6 erstellt wurden. Jeder der Protokolldatensätze umfasst einen Zeitstempel T und einem Beschreibungsdatensatz D, die jeweils aus einer der Protokollzeilen #1 - #6 extrahiert wurden. Die von sämtlichen im Netzwerk befindlichen Computern 1 erstellten Protokolldatensätze P werden von einer Protokollierungseinheit 4 für weitere Verarbeitungsschritte zur Verfügung gehalten. Im vorliegenden Ausführungsbeispiel werden die Protokolldatensätze P in einer zentralen Protokolldatenbank 5 abgespeichert. Dieses Vorgehen ist jedoch nicht zwingend. Es ist vielmehr auch möglich, die einzelnen Protokolldaten dezentral abzulegen oder ohne Speicherung direkt zur Analyseeinheit zu streamen, wobei die Protokollierungseinheit 4 lediglich die Protokolldatensätze P verwaltet und bei Bedarf auf die jeweiligen Protokolldateien der einzelnen Computer zugreift. Für das vorliegende Verfahren wird durch die Protokollierungseinheit 4 die Möglichkeit geschaffen, über ein einheitliches Interface auf alle von den Computern 1 erstellten Protokolldatensätze P zuzugreifen. Die Überwachungseinheit 3 greift über die Protokollierungseinheit 4 auf die Protokolldatensätze zu.

**Tabelle 2 - Protokolldatensätze**

| | **Quelle** | Zeitstempel (T) | Beschreibungsdatensatz (D) |
|---|---|---|---|
| P1 | fw-1 | Dec 17 17:13:11 | fw-1 iptables:**ACCEPT** IN=eth2 OUT=eth0 SRC=192.168.0.11 DST=192.168.100.5 PROTO=TCP SPT=55325 **DPT=443** |
| P2 | web-2 | Dec 17 17:13:11 | **web-2 - - "GET** /" 200 "Mozilla/4.0 (compatible; MSIE 7.0; ... |
| P3 | fw-1 | Dec 17 17:13:17 | fw-1 iptables:DROP IN=eth3 OUT=eth0 |
| | | | SRC=1.2.3.4 DST=192.168.100.6 PROTO=TCP SPT=38183**DPT=443** |
| P4 | fw-1 | Dec 17 17:13:17 | iptables**:ACCEPT** IN=eth2 OUT=eth0 |
| | | | SRC=192.168.3.44DST=192.168.100.5 PROTO=TCP SPT=4932**DPT=443** |
| P5 | web-2 | Dec 17 17:13:17 | 192.168.3.44web-2 - - "GET /" 200 "Mozilla/4.0 (compatible; MSIE 7.0; ... |
| P6 | fw-1 | Dec 17 17:13:22 | fw-1backup agent **connection opened** |

### Kalibrierung:

Im Folgenden wird eine von der Überwachungseinheit 3 ausgeführte Kalibrierung dargestellt, mit der es möglich ist, Gruppen G von Teildatensätzen (A) aus Protokolldatensätzen P zu erhalten, die typischerweise innerhalb einer bestimmten Zeitspanne DT auftreten. Diese Zeitspanne kann zwischen wenigen Millisekunden und mehreren Sekunden liegen und kann bei der Erstellung der Gruppe automatisch festgelegt bzw. nachträglich angepasst werden.

Für die Kalibrierung werden zunächst unterschiedliche in den Beschreibungsdatensätzen D der Protokolldatensätze P vorkommende Teildatensätze A ausgewählt. Da die Protokollierung im vorliegenden Ausführungsbeispiel - wie allgemein üblich - mittels Textprotokolls erfolgt, werden Teildatensätze A aus den Beschreibungsdatensätzen D in Form von zusammenhängenden Teilzeichenketten A ausgewählt. Die Auswahl der Teildatensätze A kann zufällig erfolgen, wobei vorteilhafterweise nach Teilzeichenketten der Beschreibungsdatensätze D gesucht wird, die in einer Mehrzahl von Beschreibungsdatensätzen D enthalten sind.

Im vorliegenden Ausführungsbeispiel wurden als Teilzeichenketten A "ACCEPT", "DPT=443", "web-2", "GET", "web-2", "connection opened" ausgewählt, die in **Tabelle 2** fett markiert dargestellt sind. Die Auswahl der Teilzeichenketten A kann, wie später noch dargestellt wird, wiederholt werden, wenn aufgrund der ersten Auswahl von Zeichenketten keine adäquate Kalibrierung möglich ist. Die Neuauswahl von Teilzeichenketten A sowie eine Verbesserung der Kalibrierung wird im Anschluss an die Beschreibung des Kalibrierungsvorgang dargestellt.

Anschließend wird nach Gruppen G von Teildatensätzen A gesucht, die sich in Protokolldatensätzen P befinden, deren jeweiliger Zeitstempel T innerhalb der vorgegebenen Zeitspanne DT liegt. Im vorliegenden Ausführungsbeispiel kann bei einer Vorgabe einer maximalen Zeitspanne DT von 1s festgestellt werden, dass die ausgewählten Teildatensätze A mit den Werten "ACCEPT", "DPT=443", "web-2", "GET" stets in zumindest einem Fall innerhalb der maximalen Zeitspanne DT auftreten. Auch kann festgestellt werden, dass bei einer maximalen Zeitspanne DT von 3s bis 5s die ausgewählten Teildatensätze A mit den Werten "web-2" und "connection opened" in zumindest einem Fall zufällig innerhalb der maximalen Zeitspanne DT auftreten.

Diese innerhalb derselben Zeitspanne auftretenden Teildatensätze A werden zu Gruppen G1, G2, wie in **Tabelle 3** dargestellt, zusammengefasst. **Tabelle 3** zeigt die Datenstruktur von Gruppen G1, G2:

**Tabelle 3: Gruppen**

| | **AA** | **AB** | **DT** |
|---|---|---|---|
| **G1** | DPT=443 | web-2 | 1s |
| | ACCEPT | GET | |
| **G2** | web-2 | connection opened | 3s-5s |

Um nun herauszufinden, welche Teildatensätze A nicht bloß zufällig innerhalb einer bestimmten Zeitspanne aufgetreten sind, sondern miteinander in Wechselbeziehung stehen, wird innerhalb der Beschreibungsdatensätze D der Protokolldatensätze P nach weiteren Vorkommen eines ersten Teildatensatzes AA aus einer der erstellten Gruppen G gesucht. Wird ein solches weiteres Vorkommen des ersten Teildatensatzes AA gefunden, so wird geprüft, ob sich innerhalb der vorgegebenen Zeitspanne DT die übrigen der jeweiligen Gruppe G zugeordneten Teildatensätze AB befinden.

So wurde beispielsweise im Protokolldatensatz P1 in **Tabelle 2** die Teilzeichenfolge AA= "ACCEPT" gefunden. Im Zusammenhang mit dieser Teilzeichenfolge AA wurden auch die übrigen Teilzeichenfolgen AB der Gruppe G1 mit den Werten "DPT=443" in P1 und den Werten "web-2" und "GET" in P2 gefunden. Im Protokolldatensatz P4 tritt erneut die Zeichenfolge AA="ACCEPT" auf. Nun wird überprüft, ob sich die übrigen Zeichenfolgen AB = "DPT=443", "web-2", "GET" innerhalb der vorgegebenen Zeitspanne DT befinden. Nach Überprüfung der innerhalb der Zeitspanne DT liegenden Zeichenketten P4 und P5 kann festgestellt werden, dass dies der Fall ist.

Die einzelnen erstellten Gruppen G1, G2 stehen für die Hypothese, d.h. vorläufige Annahme oder Vermutung, dass bei Auftreten der ersten Teildatensätze AA in Beschreibungsdatensätzen D von Protokolldatensätzen P die jeweiligen weiteren Teildatensätze AB in Beschreibungsdatensätzen D von Protokolldatensätzen P auftreten, wobei die den ersten Teildatensatz AA enthaltenden Protokolldatensätze P und die die weiteren Teildatensätze enthaltenden Protokolldatensätze P innerhalb einer vorgegebenen Zeitspanne DT liegen.

Kann diese in der Gruppe G1, G2 verkörperte Hypothese mehrfach bestätigt werden, so kann diese bei Vorliegen einer vorgegebenen Signifikanz zu einer als allgemein gültigen Prüfbedingung erklärt werden, wobei Abweichungen von dieser Prüfbedingung als potentielle Sicherheitsbedrohungen oder Ausfallsszenarien angesehen werden.

Eine solche Prüfbedingung kann durch einen Prüfungsdatensatz X repräsentiert werden, dessen Datenstruktur im Wesentlichen der Datenstruktur einer Gruppe G1, G2 entspricht. Jeder Prüfungsdatensatz X weist jeweils den oder die ersten Teildatensätze AA, den oder die weiteren Datensätze AB sowie die Zeitspanne DT auf.
Im Folgenden wird dargestellt, wie für eine in einer Gruppe enthaltene Hypothese ein Wahrscheinlichkeitswert ermittelt werden kann, der für den Fall des Auftretens des ersten Teildatensatzes AA in einem Protokolldatensatz die Wahrscheinlichkeit des Auftretens aller übrigen Teildatensätze AB der Gruppe innerhalb einer Zeitspanne DT nach oder vor dem Auftreten des ersten Teildatensatzes AA angibt.

Die Zuverlässigkeit einer Hypothese, die durch die Gruppe G1 oder einen dieser Gruppe G1 entsprechenden Prüfungsdatensatz X beschrieben wird, kann mittels einer Signifikanzfunktion SC (c(X), c'(X)) ermittelt werden. Dieser Signifikanzfunktion SC werden zwei Argumente zugeführt, nämlich sowohl die Anzahl der Fälle, in denen die durch die Gruppe G verkörperte Hypothese zugetroffen hat und die Anzahl der Fälle, in denen dies nicht der Fall war. Der Wert c(X) entspricht dabei der Anzahl der erfolgreichen Prüfungen und c'(X) der Anzahl der nicht erfolgreichen Prüfungen der Hypothese der Gruppe G. Übersteigt die Signifikanzfunktion einen Schwellenwert, so kann die Gruppe G als Prüfungsdatensatz X verwendet werden.

Die Verteilung der Evaluierungsergebnisse, d.h. die Anzahl der positiven und negativen Evaluierungen von Prüfungsdatensätzen oder Gruppen, kann als Ergebnis eines Bernoulli-Prozesses aufgefasst werden. Die statistische Signifikanz einer Hypothese kann insbesondere mittels eines Binomialtests ermittelt werden, wobei nur für Gruppen G, welche Hypothesen mit einer ausreichend hohen Signifikanz modellieren, Prüfungsdatensätze X erstellt werden können.

Die Signifikanzfunktion evaluiert einen Binomialtest für die Annahme, dass c(X)/(c(X)+c'(X)) größer einer angegebenen Schwellwertwahrscheinlichkeit ist, z.B. 99%. Durch die Wahl der Schwellwertwahrscheinlichkeit kann daher auch gesteuert werden, wie viele Prüfungsdatensätze wirklich bestätigt werden.

Je öfter im Zuge der Kalibrierung einer Gruppe G1, G2 zugrundeliegende Hypothese erfüllt wurde, desto größer wird auch die Zuverlässigkeit, die dieser Hypothese und damit auch der Gruppe G1, G2 zugerechnet wird. Eine Gruppe G1, G2 ist insbesondere dann als Prüfungsdatensatz X geeignet, wenn sie in einer statistisch signifikant großen Anzahl von Fällen zutrifft. Die beiden den Gruppen G1, G2 zugrundeliegenden Hypothesen lassen sich beispielsweise anhand der in **Tabelle 4** dargestellten Protokolldatensätze P überprüfen, sodass die angenommene Zuverlässigkeit der den Gruppen G1, G2 zugrundeliegenden Hypothesen erhöht wird, wenn diese zutreffen und verringert wird, wenn diese nicht zutreffen.

**Tabelle 4 - weitere Verifikation von Prüfungsdatensätzen**

| | **Quelle** | **Protokolldatensatz** | **Anmerkung** |
|---|---|---|---|
| 101 | fw-1 | Dec 17 17:25:48 fw-1 iptables:**ACCEPT** IN=eth2 OUT=eth0 SRC=192.168.2.155 DST=192.168.100.5 PROTO=TCP SPT=55325 **DPT=443** | Auslöser X1 |
| 102 | web-2 | Dec 17 17:25:49 192.168.0.11 **web-2** - - **"GET** /" 200 "Mozilla/4.0 (compatible; MSIE 7.0; ... | Folgeereignis X1 (OK), Auslöser X2 |
| 103 | fw-1 | Dec 17 17:25:49fw-1backup agent **connection opened** | Folgeereignis X2 (OK) |
| 104 | fw-1 | Dec 17 17:26:02fw-1backup agent **connection opened** | |
| 105 | fw-1 | Dec 17 17:26:03 fw-1 iptables:**ACCEPT** IN=eth2 OUT=eth0 SRC=192.168.2.155 DST=192.168.100.5 PROTO=TCP SPT=55325 **DPT=443** | Auslöser X1 |
| 106 | web-2 | Dec 17 17:26:03 192.168.2.155 **web-2** - - "**GET** / about.html" 200 "Mozilla/4.0 (compatible; MSIE 7.0; ... | Folgeereignis X1 (OK), Auslöser X2 (nicht OK, kein Folgeereignis für G2) |
| 107 | fw-1 | Dec 17 17:26:03 fw-1 iptables**:ACCEPT** IN=eth2 OUT=eth0 SRC=192.168.0.8 DST=192.168.100.5 PROTO=TCP SPT=55325 **DPT=443** | Auslöser X1 |
| 108 | web-2 | Dec 17 17:26:04 192.168.0.8 **web-2** - - **"GET** /" 200 "Mozilla/4.0 (compatible; Chromium ... | Folgeereignis X1 (OK), Auslöser X2 (nicht OK, kein Folgeereignis für G2) |

Aus **Tabelle 4** ist erkennbar, dass die Teildatensätze A der Gruppe G1 mehrfach gemeinsam in Protokolldatensätzen P innerhalb des durch die Zeitspanne DT um das Auslöserereignis vorgegebenen Beobachtungsfensters vorkommen, z.B. Protokolldatensätze 101/102, 105/106, 107/108. Bei der Gruppe G2 ist dies nicht immer der Fall, z.B. findet sich die Gruppe G2 in 102/103, allerdings folgt nach 106, 108 nicht rechtzeitig der erwartete Teildatensatz AB in einer der folgenden Protokolldatensätze. Daher würde für die Gruppe G2 in dem oben beschriebenen System kein Prüfungsdatensatz X erstellt werden.

Bei der Festlegung der dem Prüfungsdatensatz zuzuordnenden Zeitspanne DT eines Prüfungsdatensatzes X kann die Zeitspanne zwischen dem Auftreten des ersten Teildatensatzes A des Prüfungsdatensatzes X oder der Gruppe, aus der der Prüfungsdatensatz X hervorgeht, und dem Auftreten des letzten der übrigen Datensätze AB herangezogen werden, wobei vorzugsweise die maximale und minimale Zeitdifferenz, versehen mit einem Toleranzbereich, als Schwellenwerte herangezogen werden. So kann beispielsweise eine durch einen Prüfungsdatensatz X verkörperte Hypothese besagen, dass die weiteren Datensätze AB stets innerhalb eines Zeitintervalls von 3 bis 5 Sekunden nach dem Auftreten des ersten Datensatzes AA auftreten.

Am Ende des Kalibriervorgangs oder auch während des laufenden Betriebs kann untersucht werden, ob zumindest in einem vorgegebenen Anteil der Beschreibungsdatensätze D Teildatensätze A enthalten sind, die einem Prüfungsdatensatz X als erster oder übriger Teildatensatz AA, AB zugeordnet sind. Ist dies nicht der Fall, so können gezielt weitere Teildatensätze A aus solchen, noch nicht berücksichtigten Beschreibungsdatensätzen D herangezogen werden, um neue Gruppen G von Teildatensätzen A zu bilden. Diese Gruppen können erneut auf ihre statistische Signifikanz hin untersuchte werden, wobei gegebenenfalls auch statistisch zuverlässige Prüfungsdatensätze X gebildet werden.

### Laufender Betrieb:

Im Betrieb werden die laufend zur Verfügung gestellten Prüfungsdatensätze P auf das Vorhandensein von ersten Teildatensätzen AA der Prüfungsdatensätze X hin überprüft. **Tabelle 5** enthält Protokolldatensätze P eines Zeitraumes, innerhalb dessen sich der Betriebszustand durch z.B. einen Angriff auf den Webserver web-1 oder einen Hardwareausfall verändert hat. Die Prüfung, ob die Hypothese eines Prüfungsdatensatzes X zutrifft oder nicht, erfolgt während des laufenden Betriebs nach denselben Vorgaben wie während der Kalibrierung. Sofern ein erster Teildatensatz AA eines Prüfungsdatensatzes X gefunden wurde, wird nach den übrigen Teildatensätzen AB dieses Prüfungsdatensatzes X gesucht. Werden die übrigen Teildatensätze AB innerhalb der im Prüfungsdatensatz X vorgegebenen Zeitspanne nicht aufgefunden, so wird festgestellt, dass sich das System in einem Zustand befindet, der vom Normalzustand abweicht und die Überwachungseinheit erstellt eine diesbezügliche Warnung.

**Tabelle 5: Anwendung des Prüfungsdatensatzes X1 auf fortlaufende Protokolldatensätze**

| | **Quelle** | **Protokolldatensatz** | **Anmerkung** |
|---|---|---|---|
| 201 | fw-1 | Dec 17 22:06:46 fw-1 iptables:**ACCEPT** IN=eth2 OUT=eth0 SRC=192.168.0.11 DST=192.168.100.5 PROTO=TCP SPT=55325 **DPT=443** | Auslöser X1 |
| 202 | web-2 | Dec 17 22:06:46 192.168.0.11 **web-2** - - **"GET** /" 200 "Mozilla/4.0 (compatible; MSIE 7.0; ... | Folgeereignis X1 (OK) |
| 203 | fw-1 | Dec 17 22:06:18fw-1 iptables:DROP IN=eth3 OUT=eth0 SRC=1.2.3.4 DST=192.168.100.6 PROTO=TCP SPT=38183 **DPT=443** | |
| 204 | fw-1 | Dec 17 22:06:51 fw-1 iptables:**ACCEPT** IN=eth2 OUT=eth0 SRC=192.168.2.101 DST=192.168.100.5 PROTO=TCP SPT=4932 **DPT=443** | Auslöser X1 |
| 205 | web-2 | Dec 17 22:06:51 192.168.2.101**web-2** - - "GET /" 200 "Mozilla/4.0 (compatible; MSIE 7.0; ... | Folgeereignis X1 (OK) |
| 206 | fw-1 | Dec 17 22:06:58 fw-1 iptables**:ACCEPT** IN=eth2 OUT=eth0 SRC=192.168.2.101 DST=192.168.100.5 PROTO=TCP SPT=4932**DPT=443** | Auslöser X1, Folgeereignis fehlt |
| 207 | fw-1 | Dec 17 22:07:00 fw-1 iptables**:ACCEPT** IN=eth2 OUT=eth0 SRC=192.168.0.8 DST=192.168.100.5 PROTO=TCP SPT=4932**DPT=443** | Auslöser X1, Folgeereignis fehlt |
| 208 | fw-1 | Dec 17 22:07:01 fw-1 iptables**:ACCEPT** IN=eth2 OUT=eth0 SRC=192.168.2.101 DST=192.168.100.5 PROTO=TCP SPT=4932 **DPT=443** | Auslöser X1, Folgeereignis fehlt |

In dem in **Tabelle 5** dargestellten Ausführungsbeispiel fällt der Web-Server web-2 zum Zeitpunkt Dec 17 22:06:55 aus. Nach dem Protokolldatensatz 205 werden von web-2 keine Protokolldatensätze P mehr erstellt. Die Auswertung des bislang als zuverlässig eingestuften Prüfungsdatensatzes X1 ergibt, dass der ersten Teilfolge AA mit dem Wert "ACCEPT" die zweite Teilfolge mit dem Wert "web-2" innerhalb der Zeitspanne DT nicht nachfolgt und daher die Auswertung des Prüfungsdatensatzes X1 negativ ist. Die Überwachungseinheit 3 gibt eine Warnung aus und stellt dem Systemadministrator gegebenenfalls auch die im verletzten Prüfungsdatensatz X1 verkörperte Prüfbedingung oder Regel zur Verfügung.

Zudem kann die Verifikation und Falsifikation der Regeln oder Prüfbedingungen von Prüfungsdatensätzen X auch im laufenden Betrieb vorgenommen werden, wobei parallel zur Prüfung auch die jeweilige ermittelte Zuverlässigkeit Prüfbedingung des Prüfungsdatensatzes analog der Zuverlässigkeit der Hypothese einer Gruppe adaptiert wird. Die Zuverlässigkeit der Prüfbedingung eines Prüfungsdatensatzes X kann somit auch während des laufenden Betriebs angepasst werden.

### Adaptionen zur Laufzeit:

Im Folgenden werden einzelne Methoden zur Überprüfung und laufenden Validierung und Vervollständigung der bereits erstellten Prüfungsdatensätze X dargestellt, die unabhängig voneinander vorgenommen werden können.

Wird ein Austausch einzelner Computer 1 oder von Programmen 2 auf den Computern 1 vorgenommen, so können durch diese Maßnahmen bestimmte Prüfungsdatensätze X an Zuverlässigkeit verlieren, beispielsweise wenn nach der Deinstallation eines Webservers trotz Anfrage an diesen Webserver keine diesbezüglichen Protokollmeldungen mehr auftreten. In diesem Fall kann untersucht werden, ob und welche der Prüfungsdatensätze X an Zuverlässigkeit verloren haben, indem die im Zuge der Prüfung von Gruppen G1, G2 verwendete Bestimmung der Zuverlässigkeit von Hypothesen auch für die Prüfbedingungen der Prüfungsdatensätze X verwendet wird. Sinkt diese Zuverlässigkeit unter einen vorgegebenen Schwellenwert, so kann der Prüfungsdatensatz X entfernt werden.

Falls nach der Löschung eines von Prüfungsdatensätzen X weniger als ein vorgegebener Anteil der Beschreibungsdatensätze D der während eines vorgegebenen Zeitraums erstellten Protokolldatensätze P zumindest einer der zuvor ausgewählten Teilfolgen A enthält, kann erneut eine Kalibrierung durchgeführt werden. Die neu aufgefundenen Prüfungsdatensätze X werden den bisherigen, nicht gelöschten Prüfungsdatensätzen X hinzugefügt.

Sofern durch Hinzufügen von Komponenten neue Protokolldatensätze hinzukommen, in denen die zur Verfügung stehenden Teildatensätze AA, AB nicht enthalten sind, so kann eine erneute Kalibrierung vorgenommen werden, die Teildatensätze speziell aus den Protokolldatensätzen auswählt, die von den neu hinzugekommenen Komponenten stammen. Anschließend können neue Gruppen gesucht werden und es kann untersucht werden, ob diese Gruppen eine ein vorgegebenes Maß übersteigende Signifikanz aufweisen. In diesem Fall können basierend auf den signifikanten Gruppen Prüfungsdatensätze erstellt werden.

Bei demselben Prüfungsdatensatz X zugeordneten Teildatensätzen AA; AB, die sich innerhalb desselben Protokolldatensatzes P befinden, kann untersucht werden, ob der Zwischenbereich zwischen den Teildatensätzen AA, AB identisch ist. In diesem Fall wird bei der neuerlichen Durchführung einer Kalibrierung ein Teildatensatz AA, AB erstellt, und dem Prüfungsdatensatz X zugewiesen, der aus den beiden Teildatensätzen AA; AB sowie dem Zwischenbereich zwischen den Teildatensätzen AA; AB zusammengesetzt ist

## Patentansprüche

1. Verfahren zur Feststellung von Abweichungen von einem vorgegebenen Normalzustand, insbesondere verursacht durch Manipulation, bei einem Computernetzwerk (10), bei dem von den Computern (1) des Computernetzwerks (10) oder von den auf diesen Computern (1) ablaufenden Programmen (2) jeweils Protokolle erstellt werden,
- wobei von den Programmen (2) oder Computern (1) jeweils Kriterien für die Protokollierung von als relevant erachteten Ereignissen (E) festgelegt werden und im Falle des Auftretens eines solchen Ereignisses (E) jeweils ein Protokolldatensatz (P) erstellt wird, dem ein Zeitstempel (T) sowie ein Beschreibungsdatensatz (D) des jeweiligen protokollierten Ereignisses (E) zugeordnet werden, und
- wobei sämtliche von den einzelnen Computern (1) erstellten Protokolldatensätze (P) zur Verfügung gehalten werden,
- wobei im Zuge einer Kalibrierung
a) aus den Beschreibungsdatensätzen (D) der Protokolldatensätze (P) Teildatensätze (A), insbesondere zufällig, ausgewählt werden,
b) dass Gruppen (G) von Teildatensätzen (A) gebildet werden, die sich in Protokolldatensätzen (P) befinden und deren Zeitstempel (T) innerhalb einer vorgegebenen Zeitspanne (DT) liegen,
c) dass innerhalb der Beschreibungsdatensätze (D) der Protokolldatensätze (P) nach weiteren Vorkommen eines ersten Teildatensatzes (AA) aus einer der erstellten Gruppen (G) gesucht wird und geprüft wird, ob sich innerhalb der vorgegebenen Zeitspanne (DT) die übrigen der jeweiligen Gruppe (G) zugeordneten Teildatensätze (AB) befinden, wobei bei mehrmaliger erfolgreicher Prüfung jeweils ein Prüfungsdatensatz (X) umfassend den ersten Teildatensatz (AA), die übrigen Teildatensätze (AB) sowie die Zeitspanne (DT) erstellt wird, und
- dass während des laufenden Betriebs des Computernetzwerks (10) d) der Beschreibungsdatensatz (D) eines zu untersuchenden Protokolldatensatzes (P) auf das Vorhandensein eines in einem der Prüfungsdatensätze (X) abgespeicherten ersten Teildatensatzes (AA) untersucht wird,
e) wenn der erste Teildatensatz (AA) eines der Prüfungsdatensätze (X) in dem zu untersuchenden Protokolldatensatz (P) aufgefunden wurde, geprüft wird, ob die übrigen Teildatensätze (AB) des Prüfungsdatensatzes (X) in Protokolldatensätzen (P) vorhanden sind, deren Zeitstempel (T) sich vom Zeitstempel (T) des zu untersuchenden Protokolldatensatzes (P) maximal um die dem Prüfungsdatensatz (X) zugeordneten Zeitspanne (DT) unterscheidet, und
f) sofern nicht alle der übrigen Teildatensätze (AB) innerhalb vom jeweiligen Prüfungsdatensatz (P) mit einem Zeitstempel (T) innerhalb der Zeitspanne (DT) aufgefunden werden, dies als Abweichung beurteilt und gegebenenfalls eine diesbezügliche Warnung erstellt wird,
**dadurch gekennzeichnet,**
**dass** der Kalibrierungsschritt umfassend die Schritte a) bis c) in vorgegebenen Zeitintervallen wiederholt wird, und/oder in einem vorgegebenen Zeitraum nach dem Austausch oder der Umrüstung von Computern (1) oder nach dem Austausch oder der Umrüstung der auf diesen Computern ausgeführten Programmen (2) wiederholt wird, wobei jeweils nur diejenigen Protokolldatensätze berücksichtigt werden, deren Zeitstempel innerhalb des letzten Zeitintervalls oder seit dem Austausch oder der Umrüstung liegt.

2. Verfahren nach Anspruch 1, **dadurch gekennzeichnet, dass** ein dem jeweiligen Protokolldatensatz (P) zugeordneter Beschreibungsdatensatz (D) sowie die Teildatensätze (A; AA; AB) jeweils durch Zeichenketten repräsentiert werden, wobei insbesondere
a) bei der Auswahl von Teildatensätzen (A) aus den Beschreibungsdatensätzen (D) der Protokolldatensätze (P) jeweils eine zusammenhängende Teilzeichenkette der den Beschreibungsdatensatz repräsentierenden Zeichenkette ausgewählt wird und als Teildatensatz zur Verfügung gehalten wird und/oder
b) bei der Suche nach dem Vorkommen eines Teildatensatzes (A; AA; AB) im Beschreibungsdatensatz eines Protokolldatensatzes in den Schritten c), d) und e) des Patentanspruchs 1 jeweils überprüft wird, ob die Zeichenkette des Teildatensatzes (A) einer zusammenhängenden Teilzeichenkette des Beschreibungsdatensatzes (D) des Protokolldatensatzes (P) entspricht.

3. Verfahren nach Anspruch 1 oder 2, **dadurch gekennzeichnet, dass** alle Teildatensätze (A; AA; AB) jeweils dasselbe Datenvolumen und/oder dieselbe Länge aufweisen.

4. Verfahren nach einem der vorangehenden Ansprüche, **dadurch gekennzeichnet, dass** in Schritt c) ein Prüfungsdatensatz (X) jeweils nur dann erstellt wird, wenn eine Signifikanzfunktion SC (c(X), c'(X)) einen Wert angibt, der einen vorab vorgegebenen Schwellenwert übersteigt, wobei c(X) der Anzahl der erfolgreichen Prüfungen und c'(X) der Anzahl der nicht erfolgreichen Prüfungen entspricht.

5. Verfahren nach einem der vorangehenden Ansprüche, **dadurch gekennzeichnet, dass** in Schritt c) bei mehrfacher erfolgreicher Prüfung ermittelt wird, innerhalb welcher Zeitspanne die Zeitstempel (T) der einzelnen der Gruppe (G) zugeordneten Teildatensätze (AA; AB) liegen und die dem Prüfungsdatensatz (X) zugeordnete Zeitspanne (DT), insbesondere für jeden der übrigen Teildatensätze (AB) separat, auf ein Intervall festgelegt wird, das durch die minimale und maximalen Zeitdifferenz, vorzugsweise mit einem vorgegebenen Toleranzbereich, zwischen dem Auftreten des ersten Teildatensatzes (AA) und dem jeweiligen übrigen Teildatensatz (AB) festgelegt wird.

6. Verfahren nach einem der vorangehenden Ansprüche, **dadurch gekennzeichnet, dass** jeder Gruppe (G) genau zwei Teildatensätze (AA, AB) zugeordnet werden.

7. Verfahren nach einem der vorangehenden Ansprüche, **dadurch gekennzeichnet, dass** bei demselben Prüfungsdatensatz (X) zugeordneten Teildatensätzen (AA; AB), die sich innerhalb desselben Protokolldatensatzes (P) befinden, untersucht wird, ob der Zwischenbereich zwischen den Teildatensätzen (AA; AB) identisch ist, und in diesem Fall bei der neuerlichen Durchführung des Kalibrierungsschritts ein weiterer Teildatensatz (A) herangezogen wird, der aus den beiden Teildatensätzen (AA; AB) sowie dem Zwischenbereich zwischen den Teildatensätzen (AA; AB) zusammengesetzt ist.

8. Verfahren nach einem der vorangehenden Ansprüche, **dadurch gekennzeichnet, dass** den Prüfungsdatensätzen (X) ausschließlich übrige Teildatensätze (AB) hinzugefügt werden, die nicht aus dem Protokolldatensatz (P) stammen, aus dem der erste Teildatensatz (AA) stammt.

9. Verfahren nach einem der vorangehenden Ansprüche, **dadurch gekennzeichnet, dass** so viele Prüfungsdatensätze (X) erstellt werden, dass zumindest in einem vorgegebenen Anteil der Beschreibungsdatensätze (D) der während eines vorgegebenen Zeitraums erstellten Protokolldatensätze (P) jeweils Teilfolgen (A; AA; AB) enthalten sind.

10. Verfahren nach einem der vorangehenden Ansprüche, **dadurch gekennzeichnet, dass** die Ermittlung der Anzahl der erfolgreichen Prüfungen c(X) eines Prüfungsdatensatzes (X) sowie der Anzahl der nicht erfolgreichen Prüfungen c'(X) nach der Erstellung des Prüfungsdatensatzes (X), insbesondere in vorgegebenen Zeitabständen, erneut ausgeführt wird und der Prüfungsdatensatz gelöscht wird, wenn nicht eine Signifikanzfunktion SC (c(x), c'(x)) einen Wert angibt, der einen vorab vorgegebenen Schwellenwert übersteigt.

11. Verfahren nach Anspruch 9 und 10, **dadurch gekennzeichnet, dass**, falls nach der Löschung eines Prüfungsdatensatzes (X) weniger als ein vorgegebener Anteil der Beschreibungsdatensätze (D) der während eines vorgegebenen Zeitraums erstellten Protokolldatensätze (P) Teilfolgen (A; AA; AB) enthalten ist, erneut eine Kalibrierung gemäß den Schritten a) bis c) des Patentanspruchs 1 durchgeführt wird und den bisherigen, nicht gelöschten Prüfungsdatensätzen (X) neue Prüfungsdatensätze (X) hinzugefügt werden.

12. Datenträger, auf dem ein Programm zur Durchführung eines Verfahrens nach einem der Ansprüche 1 bis 11 abgespeichert ist.

## Claims

1. A method for the detection of deviations from a predetermined normal state, in particular, caused by manipulation, in the case of a computer network (10), in which in each case logs are created by the computers (1) of the computer network (10) or by the programs (2) running on these computers (1),
- wherein in each case criteria for the logging of events (E) deemed to be relevant are defined by the programs (2) or computers (1) and in the event of the occurrence of such an event (E) in each case a log data set (P) is created, to which a time stamp (T) as well as a description data set (D) of the respective logged event (E) are assigned, and
- wherein all of the log data sets (P) created by the individual computers (1) are kept available,
- wherein in the course of a calibration
a) partial data sets (A), are selected, in particular randomly, from the description data sets (D) of the log data sets (P),
b) that groups (G) of partial data sets (A) are formed, which are located in log data sets (P) and the time stamps (T) of which are within a predetermined period of time (DT),
c) that within the description data sets (D) of the log data sets (P) a search is made for additional occurrences of a first partial data set (AA) from one of the created groups (G) and it is checked whether the remaining partial data sets (AB) assigned to the respective group (G) are located within the predetermined period of time (DT), wherein in the case of repeated successful testing in each case a test data set (X) comprising the first partial data set (AA), the remaining partial data sets (AB) as well as the period of time (DT) is created, and
- that during the ongoing operation of the computer network (10)
d) the description data set (D) of a log data set (P) to be examined is examined for the presence of a first partial data set (AA) stored in one of the test data sets (X),
e) if the first partial data set (AA) of one of the test data sets (X) was found in the log data set (P) to be examined, it is examined whether the remaining partial data sets (AB) of the test data set (X) are present in log data sets (P), the time stamp (T) of which differs from the time stamp (T) of the log data set (P) to be examined maximally by the period of time (DT) assigned to the test data set (X), and
f) if all of the remaining partial data sets (AB) are not found within the respective test data set (P) with a time stamp (T) within the period of time (DT), this is considered to be a deviation and if applicable a warning in this regard is generated,
**characterized in**
**that** the calibration step comprising the steps a) to c) is repeated in predetermined time intervals, and/or in a predetermined time period after the replacement or the modification of the programs (2) performed on these computers (1), wherein in each case only those log data sets are considered, the time stamp of which is within the last time interval or since the replacement or the modification.

2. A method according to Claim 1, **characterized in that** a description data set (D) assigned to the respective log data set (P) as well as the partial data sets (A; AA; AB) are in each case represented by strings, wherein in particular
a) in the selection of partial data sets (A) from the description data sets (D) of the log data sets (P) in each case an associated partial string of the string representing the description data set is selected and is kept available as a partial data set and/or
b) in the search for the occurrence of a partial data set (A; AA; AB) in the description data set of a log data set in the steps c), d) and e) of patent Claim 1 in each case it is checked whether the string of the partial data set (A) corresponds to an associated partial string of the description data set (D) of the log data set (P).

3. A method according to Claim 1 or 2, **characterized in that** all partial data sets (A; AA; AB) in each case have the same data volume and/or the same length.

4. A method according to one of the preceding claims, **characterized in that** in step c) a test data set (X) is in each case only created when a significance function (SC (c(X), c'(X)) indicates a value, which exceeds a threshold value predetermined in advance, wherein c(X) corresponds to the number of the successful tests and c'(X) to the number of the unsuccessful tests.

5. A method according to one of the preceding claims, **characterized in that** in step c) in repeated successful testing it is determined, within which period of time the time stamps (T) of the individual partial data sets (AA; AB) assigned to the group (G) are and which period of time (DT) assigned to the test data set (X), in particular for each of the remaining partial data sets (AB) separately, is set to an interval, which is defined by the minimum and maximum time difference, preferably with a predetermined tolerance range, between the occurrence of the first partial data set (AA) and the respective remaining partial data set (AB).

6. A method according to one of the preceding claims, **characterized in that** precisely two partial data sets (AA, AB) are assigned to each group (G).

7. A method according to one of the preceding claims, **characterized in that** in the case of partial data sets (AA; AB) assigned to the same test data set (X), which are located within the same log data set (P), it is examined whether the intermediate area between the partial data sets (AA; AB) is identical, and in this event during the new implementation of the calibration step a further partial data set (A) is used, which is composed of the two partial data sets (AA; AB) as well as the intermediate area between the partial data sets (AA; AB).

8. A method according to one of the preceding claims, **characterized in that** exclusively the remaining data sets (AB), which do not come from the log data set (P), from which the first partial data set (AA) comes, are added to the test data sets (X).

9. A method according to one of the preceding claims, **characterized in that** so many test data sets (X) are created, that in each case partial sequences (A; AA; AB) are contained at least in a predetermined proportion of the description data sets (D) created during a predetermined time period.

10. A method according to one of the preceding claims, **characterized in that** the determination of the number of successful tests c(X) of a test data set (X) as well as the number of the unsuccessful tests c'(X) after the creation of the test data set (X), in particular in predetermined time intervals, are carried out again and the test data set is deleted, if a significance function SC (c(x), c'(x)) does not indicated a value, which exceeds a threshold value predetermined in advance.

11. A method according to Claim 9 and 10, **characterized in that** if after the deletion of a test data set (X) less than a predetermined proportion of the description data sets (D) of the log data sets (P) of partial sequences (A; AA; AB) created during a predetermined time period is contained, a calibration is carried out again according to the steps a) to c) of the patent Claim 1 and new test data sets (X) are added to the previous, undeleted test data sets (X).

12. A data carrier, on which a program is stored for the implementation of a method according to any one of Claims 1 to 11.

## Revendications

1. Procédé de détection d'écarts par rapport à un état normal prédéterminé, plus particulièrement provoqué par une manipulation, dans un réseau informatique (10), dans lequel, des protocoles sont établis par les ordinateurs (1) du réseau informatique (10) ou par les programmes (2) s'exécutant sur ces ordinateurs,
- des critères pour la protocolisation d'événements (E) considérés comme pertinents étant déterminés par les programmes (2) ou les ordinateurs (1) et, dans le cas de la survenance d'un tel événement (E), un jeu de données de protocole (P) est créé, auquel correspond un horodatage (T) ainsi qu'un jeu de données de description (D) de l'événement protocolisé (E) correspondant et
- tous les jeux de données de procoles (P) créés par les différents ordinateurs (1) étant mis à disposition,
- au cours d'une calibration :
a) des jeux de données partiels (A) étant sélectionnés, particulièrement de manière aléatoire, parmi les jeux de données de description (D) et des jeux de données de protocoles (P),
b) des groupes (G) de jeux de données partiels (A) étant formés, qui se trouvent dans des jeux de données de protocoles (P) et leur horodatage (T) se trouvant à l'intérieur d'une période de temps (DT) prédéterminée,
c) à l'intérieur des jeux de données de description (D) et jeux de données de protocoles (P), après l'apparition supplémentaire d'un premier jeu de données partiel (AA) provenant d'un des groupes (G) créés, une recherche et une vérification étant effectuées afin de savoir si le reste des jeux de données partiels (AB) correspondant au groupe (G) respectif se trouvent à l'intérieur de la période de temps (DT) prédéterminée, et, dans le cas d'une vérification réussie plusieurs fois, un jeu de données de vérification (X), comprenant le premier jeu de données partiel (AA), les autres jeux de données partiels (AB) ainsi que la période de temps (DT), est créé, et
- pendant le fonctionnement du réseau informatique (10)
d) le jeu de données de description (D) d'un jeu de données de protocole (P) à examiner est examiné afin de détecter la présence d'un premier jeu de données partiel (AA) enregistré dans un des jeux de données de vérification (X),
e) lorsque le premier jeu de données partiel (AA) d'un des jeux de données de vérification (X) a été trouvé dans le jeu de données de protocole (P) à examiner, il est vérifié si les autres jeux de données partiels (AB) du jeu de données de vérification (X) sont présents dans les jeux de données de protocole (P), dont l'horodatage (T) est différent de l'horodatage (T) du jeu de données de protocole (P) à examiner au maximum de la période de temps (DT) correspondant au jeu de données de vérification (X), et
f) si tous les autres jeux de données partiels (AB) ne sont pas trouvés à l'intérieur du jeu de données de vérification (P) correspondant avec un horodatage (T) à l'intérieur de la période de temps (DT), cela est considéré comme un écart et, le cas échéant, un avertissement approprié est déclenché,
**caractérisé en ce que**
l'étape de calibration comprenant les étapes a) à c) est répétée à des intervalles prédéterminés et/ou, dans une période prédéterminée après le remplacement ou le changement des ordinateurs (1) ou après le remplacement ou le changement des programmes (2) exécutés sur ces ordinateurs, seuls les jeux de données de protocole dont l'horodatage se trouve à l'intérieur du dernier intervalle ou depuis le remplacement ou le changement étant pris en compte.

2. Procédé selon la revendication 1, **caractérisé en ce qu'**un jeu de données de description (D) correspondant au jeu de données de protocole (P) ainsi que les jeux de données partiels (A ; AA ; AB) sont représentés par des chaînes de caractères, plus particulièrement :
a) lors de la sélection de jeux de données partiels (A) dans les jeux de données de description (D) des jeux de données de protocole (P), une chaîne de caractères partielle cohérente ou la chaîne de caractères représentant le jeu de données de description étant sélectionnée et mise à disposition en tant que jeu de données partiel et/ou
b) lors de la recherche, après l'apparition d'un jeu de données partiel (A ; AA ; AB) dans le jeu de données de description d'un jeu de données de protocole, dans les étapes c), d) et e) de la revendication 1, il est vérifié si la chaîne de caractères du jeu de données partiel (A) correspond à une chaîne de caractères partielle cohérente du jeu de données de description (D) du jeu de données de protocole (P).

3. Procédé selon la revendication 1 ou 2, **caractérisé en ce que** tous les jeux de données partiels (A ; AA ; AB) présentent le même volume de données et/ou la même longueur.

4. Procédé selon l'une des revendications précédentes, **caractérisé en ce que**, dans l'étape c), un jeu de données de vérification (X) n'est créé que lorsqu'une fonction de significativité SC (c(X), c'(X)) indique une valeur qui dépasse une valeur seuil prédéterminée, c(X) correspondant au nombre de vérifications réussies et c'(X) correspondant au nombre de vérifications non réussies.

5. Procédé selon l'une des revendications précédentes, **caractérisé en ce que**, dans l'étape c), dans le cas d'une vérification réussie plusieurs fois, il est déterminé à l'intérieur de quelle période de temps se trouve l'horodatage (T) des différents jeux de données partiels (AA ; AB) correspondant au groupe (G) et la période de temps (DT) correspondant au jeu de données de vérification (X), plus particulièrement séparément pour chacun des autres jeux de données partiels (AB), est déterminée sur un intervalle qui est déterminé par la différence de temps minimale et maximale, de préférence avec une plage de tolérance prédéterminée, entre la survenance du premier jeu de données partiel (AA) et l'autre de jeu de données partiel (AB) correspondant.

6. Procédé selon l'une des revendications précédentes, **caractérisé en ce qu'**à chaque groupe (G) correspondent exactement deux jeux de données partiels (AA, AB).

7. Procédé selon l'une des revendications précédentes, **caractérisé en ce que**, dans les jeux de données partiels (AA ; AB) correspondant au même jeu de données de vérification (X), qui se trouvent à l'intérieur du même jeu de données de protocole (P), il est vérifié si la zone intermédiaire entre les jeux de données partiels (AA ; AB) est identique et, dans ce cas, lors de la nouvelle réalisation de l'étape de calibrage, un jeu de données partiel (A) supplémentaire est utilisé, qui est constitué des deux jeux de données partiels (AA ; AB) ainsi que la zone intermédiaire entre les jeux de données partiels (AA ; AB).

8. Procédé selon l'une des revendications précédentes, **caractérisé en ce que** seuls les autres jeux de données partiels (AB) qui ne proviennent pas du jeu de données de protocole (P), d'où provient le premier jeu de données partiel (AA), sont ajoutés aux jeux de données de vérification (X).

9. Procédé selon l'une des revendications précédentes, **caractérisé en ce qu'**il est créé autant de jeux de données de vérification (X) que de séries partielles (A ; AA ; AB) sont contenues dans une partie prédéterminée des jeux de données de description (D) des jeux de données de protocole (P) créés pendant une période prédéterminée.

10. Procédé selon l'une des revendications précédentes, **caractérisé en ce que** la détermination du nombre de vérifications réussies c(X) d'un jeu de données de vérification (X) ainsi que du nombre de vérifications non réussies c'(X) après la création du jeu de données de vérification (X), plus particulièrement à des intervalles prédéterminés, est effectuée à nouveau et le jeu de données de vérification est supprimé lorsqu'une fonction de significativité SC (c(X), c'(X)) n'indique pas une valeur qui dépasse une valeur seuil prédéterminée.

11. Procédé selon la revendication 9 et 10, **caractérisé en ce que**, dans le cas où, après la suppression d'un jeu de données de vérification (X), moins d'une part prédéterminée des jeux de données de description (D) des séries partielles (A ; AA ; AB) des jeux de données de protocole (P) créés pendant une période prédéterminée est contenue, un calibrage est effectué à nouveau selon les étapes a) à c) de la revendication 1 et de nouveaux jeux de données de vérification (X) sont ajoutés aux précédents jeux de données de vérification (X) non supprimés.

12. Support de données sur lequel un programme pour la mise en oeuvre d'un procédé selon l'une des revendications 1 à 11 est enregistré.
